(19) Europäisches Patentamt
European Patent Office
Office européen des brevets

(11) EP 3 719 702 A1

(12) EUROPEAN PATENT APPLICATION

(43) Date of publication:
07.10.2020 Bulletin 2020/41

(51) Int Cl.:
*G06K 9/62* (2006.01)

(21) Application number: 19465522.1

(22) Date of filing: 03.04.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Elektrobit Automotive GmbH
91058 Erlangen (DE)

(72) Inventors:
• Radu, Petru
300692 Timisoara (RO)
• Grigorescu, Sorin Mihai
500132 Brasov (RO)

(74) Representative: Thies, Stephan
Continental Automotive GmbH
Intellectual Property
Sodener Straße 9
65824 Schwalbach am Taunus (DE)

(54) **TRAINING OF A NEURAL NETWORK FOR SEGMANTIC SEGMENTATION USING ADDITIONAL TRANSFORMED IMAGES.**

(57) The present invention is related to a method, a computer program code, and an apparatus for training a neural network for semantic segmentation. The invention is further related to a neural network, to a driver assistance system comprising a neural network, and to an autonomous or semi-autonomous vehicle comprising such a driver assistance system. In a first step an input image is received (10). A set of additional training images is then generated (11) from the input image. Finally, the neural network is trained (12) with the set of additional training images and the input image.

```
┌─────────────────────────────┐
│         Receive             │ ─── 10
│       input image           │
└─────────────────────────────┘
              │
              ▼
┌─────────────────────────────┐
│       Generate set of       │ ─── 11
│   additional training images │
└─────────────────────────────┘
              │
              ▼
┌─────────────────────────────┐
│ Train neural network with input image │ ─── 12
│ and set of additional training images  │
└─────────────────────────────┘
```

FIG. 1

**Description**

The present invention is related to a method, a computer program code, and an apparatus for training a neural network for semantic segmentation. The invention is further related to a neural network, to a driver assistance system comprising a neural network, and to an autonomous or semi-autonomous vehicle comprising such a driver assistance system.

The driving strategies deployed by highly autonomous driving systems are dependent on the driving context, i.e. different driving strategies are used when the ego-car is driving on a motorway, in a city, or when it is trying to park, etc. Accordingly, in order to enable a highly autonomous driving system to select an optimal driving strategy, it first needs to be aware of the context in which the vehicle is driving. For this purpose, sensors mounted on the car generate data, which is then processed to model various functions of the highly autonomous driving system.

One type of processing is known as semantic segmentation. In the task of semantic segmentation, every pixel in an image is annotated with an object class label. In a self-driving environment, these classes could be road, vehicle, pedestrian, building, tree, sky, etc. The term semantic segmentation is widely used in the field of autonomous driving in conjunction with camera sensors to generate a classification label for the objects surrounding the vehicle. Semantic segmentation is one of the high-level tasks in computer vision aiming at complete scene understanding. The role of driving scene understanding as a core computer vision problem is of high importance for the future of autonomous vehicles, enabling self-driving cars to minimize erroneous decisions and fatalities.

Although semantic segmentation can be performed with traditional image processing related methods, for autonomous driving applications, approaches based on machine learning are typically employed.

In machine learning, some major application scenarios involve image feature extraction. Classical image feature extraction may be time consuming and require skilled engineers to develop feature extraction algorithms. Deep Learning architectures are employed to address the automation of feature learning from images, and have become the preferred choice of feature extraction for object detection and classification in image processing and computer vision. A specific type of deep learning neural networks, which imitate the classical convolution operation from the image processing field, are called convolutional neural networks.

Although convolutional neural networks are capable of eliminating the feature design stage, their complexity increases proportionally with the size of the input data and the desired task. In the automotive industry, however, the memory resources are limited, and the power consumption has to be minimized.

In particular two issues need to be considered when convolutional neural networks are used for semantic segmentation. The first issue is the large number of parameters, often a few million parameters. These require significant memory resources and increased processing capabilities. The second issue is a potential lack of sufficient training data for a training procedure. In order to achieve robust decisions, i.e. decisions that are less sensitive to image noise artifacts, a sufficient amount of training data is needed.

It is an object of the present invention to provide a solution for simplifying the training procedure of a neural network.

This object is achieved by a method for training a neural network for semantic segmentation according to claim 1, by a computer program code according to claim 8, and by an apparatus for training a neural network for semantic segmentation according to claim 9. The dependent claims include advantageous further developments and improvements of the present principles as described below.

According to a first aspect, a method for training a neural network for semantic segmentation comprises:

- receiving an input image;
- generating a set of additional training images from the input image; and
- training the neural network with the set of additional training images and the input image.

Similarly, a computer program code comprises instructions, which, when executed by at least one processor, cause the at least one processor to train a neural network for semantic segmentation by performing the steps of:

- receiving an input image;
- generating a set of additional training images from the input image; and
- training the neural network with the set of additional training images and the input image.

The term computer has to be understood broadly. In particular, it also includes workstations and other processor-based data processing devices.

The computer program code can, for example, be made available for electronic retrieval or stored on a computer-readable storage medium.

According to a further aspect, an apparatus for training a neural network for semantic segmentation comprises:

- an input for receiving an input image;
- an image processor for generating a set of additional training images from the input image; and
- a training unit for training the neural network with the set of additional training images and the input image.

The proposed solution addresses the limitation of undertraining a deep network due to insufficient intra-class variability in the data using a hybrid approach. In this hybrid approach, additional training images are generated from the original image. The resulting set of images is then used together with the original image for training the neural network. As a consequence, the amount of training data that needs to be provided is reduced. This makes training and deployment of a neural network practical even for applications where the input to the neural network has a high number of dimensions, e.g. several thousands. Such applications can be found, for example, in the automotive industry.

In one advantageous embodiment, generating the set of additional training images comprises transforming the input image into 2D feature space representations of the input image. For this purpose, preferably 2D filters are applied to the input image, e.g. a bank of texture filters.

A typical convolutional neural network consists of a sequence of convolutional layers, interspersed with activation functions and pooling layers, and a fully connected layer at the output of the network. The filters that are being used on the first layer typically try to detect raw features, such as curves, edges or circles. As the processing moves to next layers, more complex and larger features are being considered.

The proposed solution supports the detection of raw features by introducing an image feature extraction mechanism, preferably a mechanism using textures. This solution has several advantages. By providing the filtered images as input to a deep neural network, a typical neural network will reach the desired accuracy in a reduced number of iterations compared to the situation when only the original image is fed into the network. In addition, when the number of iterations for training does not need to be reduced, the complexity of the neural network architecture can be simplified. The reasoning behind this idea is that the first levels of convolution in a typical convolutional neural network learn the basic features of an input image. However, if images containing features that were designed for the purpose of semantic segmentation are fed into the network together with the original image, the number of layers of the neural network architecture can be reduced. The simplification of the network architecture is very beneficial for applications in the automotive industry, where hardware resources, power consumption and dissipated heat have to be minimized.

In one advantageous embodiment, the 2D filters are derived from Laws' 1D texture masks [1]. These 1D masks, or vectors, have been empirically determined as being well-suited for detecting various types of texture features, in particular levels, spots, edges, and ripples. The 2D filters are obtained from pairs of 1 D masks by calculating the outer products of the pairs of the respective vectors.

In one advantageous embodiment, at least one training image is obtained by applying two 2D filters to the input image and averaging an output of the two 2D filters. This approach is particularly advantageous for handling certain symmetric pairs of 1D masks. For example, a first pair may measure the vertical edge content, whereas a second pair measures the horizontal edge content. The average of these two measures is the overall edginess of the input image.

In one advantageous embodiment, the neural network is a convolutional neural network. Convolutional neural networks are particularly well-suited for processing images.

Advantageously, a convolutional neural network for semantic segmentation is trained in accordance with a method according to the invention. Such a convolutional neural network is preferably used in driver assistance system, which may be comprised in an autonomous or semi-autonomous vehicle, e.g. for selecting a driving strategy.

Further features of the present invention will become apparent from the following description and the appended claims in conjunction with the figures.

Figures

Fig. 1 schematically illustrates a method for training a neural network for semantic segmentation;

Fig. 2 schematically illustrates a first embodiment of an apparatus for training a neural network for semantic segmentation;

Fig. 3 schematically illustrates a second embodiment of an apparatus for training a neural network for semantic segmentation;

Fig. 4 illustrates an example of a semantic segmentation of a captured image of a driving scene; and

Fig. 5 depicts an example of training images derived from an input image.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

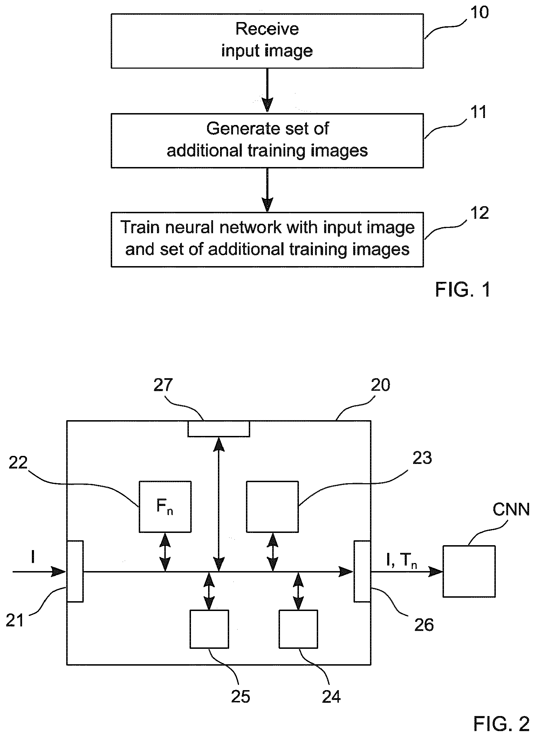

Fig. 1 schematically illustrates a method for training a neural network for semantic segmentation. The neural network may be, for example, a convolutional neural network. In a first step an input image is received 10. A set of additional training images is then generated 11 from the input image. For this purpose the input image may be transformed into 2D feature space representations of the input image, e.g. by applying 2D filters to the input image. Such 2D filters may be derived from Laws' 1 D texture masks. In some cases, two 2D filters may be applied to an input image. In such cases, the output of the two 2D filters is preferably averaged. Finally, the neural network is trained 12 with the set of additional training images and the input image.

Fig. 2 schematically illustrates a block diagram of a first embodiment of an apparatus 20 for training a neural network CNN for semantic segmentation. The neural network may be, for example, a convolutional neural network. The apparatus 20 has an input 21 for receiving an input image I. An image processor 22 generates a set of additional training images $T_n$ from the input image I. For this purpose, the image processor 22 may transform the input image I into 2D feature space representations of the input image I, e.g. by applying 2D filters $F_n$ to the input image I. Such 2D filters $F_n$ may be derived from Laws' 1D texture masks. In some cases, two 2D filters $F_n$ may be applied to an input image I. In such cases, the output of the two 2D filters $F_n$ is preferably averaged. The apparatus 20 further has a training unit 23 for training the neural network CNN with the set of additional training images $T_n$ and the input image I. For this purpose the set of additional training images $T_n$ and the input image I can be made available via an output 26. The output 26 may also be combined with the input 21 into a single bidirectional interface. Data generated by the apparatus 20 can likewise be stored in a local storage unit 25.

The image processor 22 and the training unit 23 may be controlled by a controller 24. A user interface 27 may be provided for enabling a user to modify settings of the image processor 22, the training unit 23, or the controller 24. The image processor 22, the training unit 23, and the controller 24 can be embodied as dedicated hardware units. Of course, they may likewise be fully or partially combined into a single unit or implemented as software running on a processor.

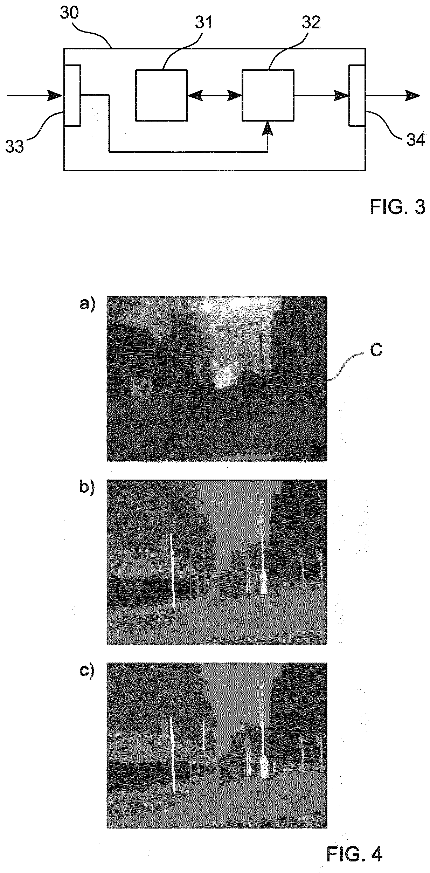

A block diagram of a second embodiment of an apparatus 30 for training a neural network for semantic segmentation is illustrated in Fig. 3. The apparatus 30 comprises a processing device 31 and a memory device 32. For example, the apparatus 30 may be a computer or an electronic control unit. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 25 and the memory device 32 may include volatile and/or non-volatile memory regions and storage devices such as hard disk drives, optical drives, and/or solid-state memories.

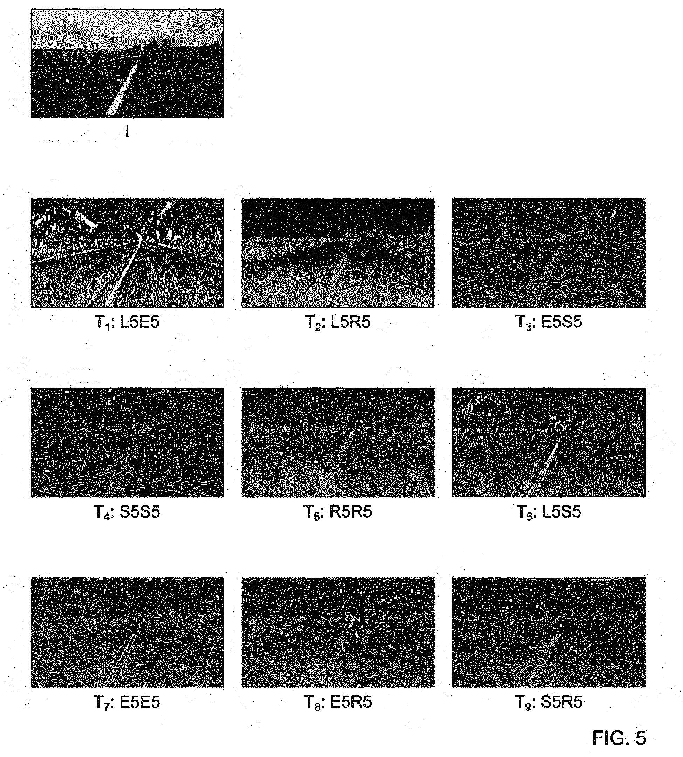

In the following, a more detailed description of the present approach for training a neural network for semantic segmentation shall be given with reference to Fig. 4 and Fig. 5.

Fig. 4 illustrates an example of a semantic segmentation of a captured image C of a driving scene. in the figure, Fig. 4a) depicts the captured image C, Fig. 4b) depicts the corresponding ground truth, i.e. objects manually labeled by a human operator, and Fig. 4c) depicts the segmentation result. The deep network architecture employed for semantic segmentation has to be trained on a large number of images for which there is a ground truth available. In the training process, the convolutional layers are modelling image features. When applied to new, unlabeled data, these modelled image features shall produce an output that is as similar to the manually labeled image as possible.

In deep learning application scenarios, usually one of the factors that significantly influence the accuracy of the model are the quantity of training data and its intra-class variability. The larger the number of available images for each class is, the higher the performance will be. However, it is not always possible to provide adequate training data. As a result, in such cases the convolutional filters of the deep network architecture may not extract the most representative features for semantic segmentation, i.e. the convolutional neural network is undertrained.

The present solution addresses the limitation of undertraining a deep network due to insufficient intra-class variability in the data with a hybrid approach. In this hybrid approach, the original image is initially transformed into several 2D feature space representations of the same size as the original image by applying a filter bank of texture filters.

Texture plays an important role in many computer vision tasks, such as object segmentation, scene classification, surface orientation, or shape determination. Texture is characterized by the spatial distribution of grey levels in a neighbourhood. Thus, texture cannot be defined for a point. The resolution at which an image is observed determines the scale at which the texture is perceived. A connected set of pixels satisfying a given grey-level property, which occurs repeatedly in an image region, constitutes a textured region.

To numerically represent the texture features and transform the original image into representations, where objects with similar texture have similar values of pixels' intensities, there are certain filtering techniques in image processing applying so-called Laws' texture masks [1]. These 1D masks were empirically determined and are summarized in the following table.

| L5 (Level) | (1 4 6 4 1) |
|---|---|
| E5 (Edge) | (-1 -2 0 2 1) |
| S5 (Spot) | (-1 0 2 0 -1) |
| R5 (Ripple) | (1 -4 6 -4 1) |

The mask L5 (Gaussian) gives a centre-weighted local average. The mask E5 (gradient) responds to row or column step edges. The mask S5 (LOG) detects spots. The mask R5 (Gabor) detects ripples. Using the 1D texture masks, 2D filters are created by multiplying the 1D masks as vector dot products. For example, the 2D texture filter E5L5 is given by:

$$\begin{pmatrix} -1 \\ -2 \\ 0 \\ 2 \\ 1 \end{pmatrix} \times (1 \quad 4 \quad 6 \quad 4 \quad 1) = \begin{pmatrix} -1 & -4 & -6 & -4 & -1 \\ -2 & -8 & -12 & -8 & -1 \\ 0 & 0 & 0 & 0 & 0 \\ 2 & 8 & 12 & 8 & 2 \\ 1 & 4 & 6 & 4 & 1 \end{pmatrix}.$$

Usually nine texture filters are employed, as shown in the table below. Where two 2D texture filters are present in the table, the output will be the average of the two filters.

| | |
|---|---|
| L5E5/E5L5 | L5S5/S5L5 |
| L5R5/R5L5 | E5E5 |
| E5S5/S5E5 | E5R5/R5E5 |
| S5S5 | S5R5/R5S5 |
| R5R5 | |

Fig. 5 depicts exemplary training images $T_n$ derived from an input image I using these 2D texture filters. The newly obtained transformed images $T_n$ are used together with the original image I in the training process of a deep network architecture used for semantic segmentation. The additional information resulting from the filtering operation performs the traditional job of a sub-part of the network architecture. Therefore, either the number of iterations required for training is reduced or the network architecture is simplified, i.e. a certain number of layers can be removed from the network.

References

[1] K. Laws: "Textured Image Segmentation", Ph.D. Dissertation, University of Southern California, January 1980; available at https://apps.dtic.mil/dtic/tr/fulltext/u2/a083283.pdf

**Claims**

1.  A method for training a neural network (CNN) for semantic segmentation, the method comprising:

    - receiving (10) an input image (I);
    - generating (11) a set of additional training images ($T_n$) from the input image (I); and
    - training (12) the neural network (CNN) with the set of additional training images ($T_n$) and the input image (I).

2.  The method according to claim 1, wherein generating (11) the set of additional training images ($T_n$) comprises transforming the input image (I) into 2D feature space representations of the input image (I).

3.  The method according to claim 1 or 2, wherein generating (11) the set of additional training images ($T_n$) comprises applying 2D filters ($F_n$) to the input image (I).

4.  The method according to claim 3, wherein the 2D filters ($F_n$) are derived from Laws' 1D texture masks.

5.  The method according to claim 4 or 5, wherein at least one training image ($T_n$) is obtained by applying two 2D filters ($F_n$) to the input image (I) and averaging an output of the two 2D filters ($F_n$).

6.  The method according to any of the preceding claims, wherein the neural network (CNN) is a convolutional neural network.

7.  A computer program code comprising instructions, which, when executed by at least one processor, cause the at least one processor to perform the method of any of claims 1 to 6 for training a neural network (CNN) for semantic segmentation.

8.  An apparatus (20) for training a neural network (CNN) for semantic segmentation, the apparatus (20) comprising:

    - an input (21) for receiving (10) an input image (I);
    - an image processor (22) for generating (11) a set of additional training images ($T_n$) from the input image (I); and
    - a training unit (23) for training (12) the neural network (CNN) with the set of additional training images ($T_n$) and the input image (I).

9. A convolutional neural network (CNN) for semantic segmentation, **characterized in that** the convolutional neural network has been trained in accordance with a method according to any of claims 1 to 6.

10. A driver assistance system comprising a convolutional neural network (CNN) according to claim 9 for semantic segmentation of a captured image (C).

11. An autonomous or semi-autonomous vehicle comprising a driver assistance system according to claim 10.

FIG. 1

FIG. 2

FIG. 3

FIG. 4

I

T₁: L5E5

T₂: L5R5

T₃: E5S5

T₄: S5S5

T₅: R5R5

T₆: L5S5

T₇: E5E5

T₈: E5R5

T₉: S5R5

FIG. 5

Europäisches
Patentamt

European
Patent Office

Office européen
des brevets

# EUROPEAN SEARCH REPORT

Application Number

EP 19 46 5522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAYLOR LUKE ET AL: "Improving Deep Learning with Generic Data Augmentation", 2018 IEEE SYMPOSIUM SERIES ON COMPUTATIONAL INTELLIGENCE (SSCI), IEEE, 18 November 2018 (2018-11-18), pages 1542-1547, XP033509690, DOI: 10.1109/SSCI.2018.8628742 [retrieved on 2019-01-28] * Section I, II B; figure 1 * | 1-11 | INV. G06K9/62 |
| X | MIKOLAJCZYK AGNIESZKA ET AL: "Data augmentation for improving deep learning in image classification problem", 2018 INTERNATIONAL INTERDISCIPLINARY PHD WORKSHOP (IIPHDW), IEEE, 9 May 2018 (2018-05-09), pages 117-122, XP033360783, DOI: 10.1109/IIPHDW.2018.8388338 [retrieved on 2018-06-18] | 1,7-11 | |
| A | * Abstract, Section I, II C, III B 1st * | 2-6 | TECHNICAL FIELDS SEARCHED (IPC) |
| A | SHANNA M ET AL: "Evaluation of texture methods for image analysis", INTELLIGENT INFORMATION SYSTEMS CONFERENCE, THE SEVENTH AUSTRALIAN AND NEW ZEALAND 2001 NOV. 18-21, 2001, PISCATAWAY, NJ, USA, IEEE, 18 November 2001 (2001-11-18), pages 117-122, XP010570327, ISBN: 978-1-74052-061-4 * Section I, II * | 1-11 | G06K |

-/--

The present search report has been drawn up for all claims

| Place of search | Date of completion of the search | Examiner |
|---|---|---|
| The Hague | 2 October 2019 | Meurisse, Wim |

page 1 of 2

Europäisches
Patentamt

European
Patent Office

Office européen
des brevets

# EUROPEAN SEARCH REPORT

Application Number

EP 19 46 5522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROS GERMAN ET AL: "The SYNTHIA Dataset: A Large Collection of Synthetic Images for Semantic Segmentation of Urban Scenes", 2016 IEEE CONFERENCE ON COMPUTER VISION AND PATTERN RECOGNITION (CVPR), IEEE, 27 June 2016 (2016-06-27), pages 3234-3243, XP033021505, DOI: 10.1109/CVPR.2016.352 [retrieved on 2016-12-09] * Section 1, 3.1, 4.2 * ----- | 1-11 | |

TECHNICAL FIELDS
SEARCHED      (IPC)

The present search report has been drawn up for all claims

| Place of search | Date of completion of the search | Examiner |
|---|---|---|
| The Hague | 2 October 2019 | Meurisse, Wim |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

............................................................................

& : member of the same patent family, corresponding
　　document

EPO FORM 1503 03.82 (P04C01)

**EP 3 719 702 A1**

**Non-patent literature cited in the description**

- Textured Image Segmentation. **K. LAWS.** Ph.D. Dissertation. University of Southern California, January 1980